# EUROPEAN PATENT SPECIFICATION

(11) **EP 4 338 077 B1**
(45) Date of publication and mention of the grant of the patent: **29.07.2026**
(21) Application number: 21945455.0
(22) Date of filing: 16.06.2021
(51) Int. Cl.: G06F 21/57, H04L 9/40, H04W 12/12, H04W 12/63

(54) **METHOD, APPARATUS AND SYSTEM FOR VULNERABILITY DETECTION**
VERFAHREN, VORRICHTUNG UND SYSTEM ZUR ERKENNUNG VON SCHWACHSTELLEN
PROCÉDÉ, APPAREIL ET SYSTÈME DE DÉTECTION DE VULNÉRABILITÉ

(43) Date of publication of application: 20.03.2024
(73) Proprietor: Siemens Aktiengesellschaft, 80333 München (DE)
(72) Inventor: YAN, Tao, Beijing 100102 (CN); LI, Rui, Beijing 100102 (CN); WAN, Shuo, Beijing 100023 (CN); WANG, Zhe, Beijing 100012 (CN); GAO, Yong Ji, Beijing 102601 (CN); MA, Gong Su, Beijing 100107 (CN)
(74) Representative: Isarpatent
(86) International application number: PCT/CN2021/100423
(87) International publication number: WO 2022/261868

(56) References cited:
- CN-A- 104 821 950
- CN-A- 105 933 288
- CN-A- 111 726 810
- CN-A- 111 814 155
- US-A1- 2008 004 805
- US-A1- 2009 038 014
- US-A1- 2010 100 930
- US-A1- 2011 093 786

## Description

### Technical Field

The present invention relates to security technology, and more particularly to a method, apparatus, system and computer-readable storage medium for vulnerability detection.

### Background Art

Vulnerabilities in a device are usually defects caused by specific implementation of hardware, software, or protocol, or network security policy, which may cause great damages. They may enable attackers to access or destroy the device without authorization, arising high security risk.

CN 111726810 A relates to a system and method for wireless signal monitoring and wireless communication behavior auditing, specifically designed for CNC machining environments.

US 2010/100930 A1 relates to a system and method for discovering wireless devices and determining their locations within a given environment.

### Summary of the Invention

In present disclosure, we propose an easy implemented vulnerability detection solution, to locate devices in an environment and detect possible vulnerabilities in them. The present invention is defined by the appended independent claims. Preferred embodiments are set out in the dependent claims.

According to a first aspect of the present disclosure, a method for vulnerability detection via a first wireless portable apparatus is presented, devices locating and vulnerabilities detection are executed by the first wireless portable apparatus. Also, the apparatus and computer-readable medium storing instructions executing the method are also presented.

According to a second aspect of the present disclosure, a method for vulnerability detection via a system including a second wireless portable apparatus, a third wireless portable apparatus and a cloud server is presented. The system, respective apparatuses and computer-readable medium storing instructions executing the method are also presented.

With the solutions presented, location based device identification can be precisely conducted, also vulnerability detection result can be displayed together with precise location of each device. With the acquired spatial model of an environment, a map of the environment and the location of wireless portable apparatus(es) can be displayed on the map. User can easily scan devices and detect vulnerabilities of found devices. Also, the detection result can be displayed based on precise location for users to get clear information easily.

Optionally, each found device's location can be determined based on the location of the wireless portable apparatus(es) and be displayed at respective determined location on the map. So, the more precise location of the each found device can be decided and displayed.

Optionally, the environment can be scanned via a WiFi network card for devices, and a WiFi list in the environment can be acquired, including the list of the found devices. Taking advantage of WiFi device scanning function, devices in the environment can be easily found.

### Brief Description of the Drawings

The above mentioned attributes, features and advantages of the present disclosure and the manner of attaining them will become more apparent and the present disclosure itself will be better understood by reference to the following description of embodiments taken in conjunction with the accompanying drawings, wherein:
FIG.1 depicts a block diagram of a first wireless portable apparatus for vulnerability detection in accordance with one embodiment of the present disclosure.
FIG.2 depicts a flow diagram of a method for vulnerability detection in accordance with one embodiment of the present disclosure.
FIG.3 depicts a block diagram of a system for vulnerability detection in accordance with one embodiment of the present disclosure.
FIG.4 depicts a flow diagram of a method for vulnerability detection in accordance with one embodiment of the present disclosure.
FIG.5 depicts a block diagram of a second wireless portable apparatus for vulnerability detection in accordance with one embodiment of the present disclosure.
FIG.6 depicts a block diagram of a cloud server for vulnerability detection in accordance with one embodiment of the present disclosure.
FIG.7 depicts a block diagram of a third wireless portable apparatus for vulnerability detection in accordance with one embodiment of the present disclosure.
FIG.8A~FIG.8H depict user interfaces during the process of device locating and vulnerability detecting.

### Reference Numbers:

10, a first apparatus for vulnerability detection
101, at least one processor
102, at least one memory
103, at least one I/O component
104, at least one wireless communication module
105, at least one camera
11, a vulnerability detection program
111, device locating module
112, vulnerability detection module
100, 300, methods for vulnerability detection
S101∼S107, steps of method 100
S301~S315, steps of method 300
200, a system for vulnerability detection
20, a second apparatus for vulnerability detection
30, a cloud server
40, a third apparatus for vulnerability detection
61, a first location
62,62',62" , a second location
70, an environment in which devices are located and vulnerability are detected
80, a user
90, spatial model
201, at least one processor
202, at least one memory
203, I/O
204, a wireless communication module
21, a vulnerability detection program
211, device locating module
212, vulnerability detection module
301, at least one processor
302, at least one memory
303, a wireless communication module
31, a vulnerability detection program
311, device locating module
312, vulnerability detection module
401, at least one processor
402, at least one memory
403, I/O
404, a wireless communication module
41, a vulnerability detection program
411, device locating module
412, vulnerability detection module

### Detailed Description of Example Embodiments

Hereinafter, above-mentioned attributes and other features of the present disclosure are described in detail. Various embodiments are described with reference to the drawings, where like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

When introducing elements of various embodiments of the present disclosure, the articles "a", "an", "the" and "said" are intended to mean that there are one or more of the elements. The terms "comprising", "including" and "having" are intended to be inclusive and mean that there may be additional elements other than the listed elements.

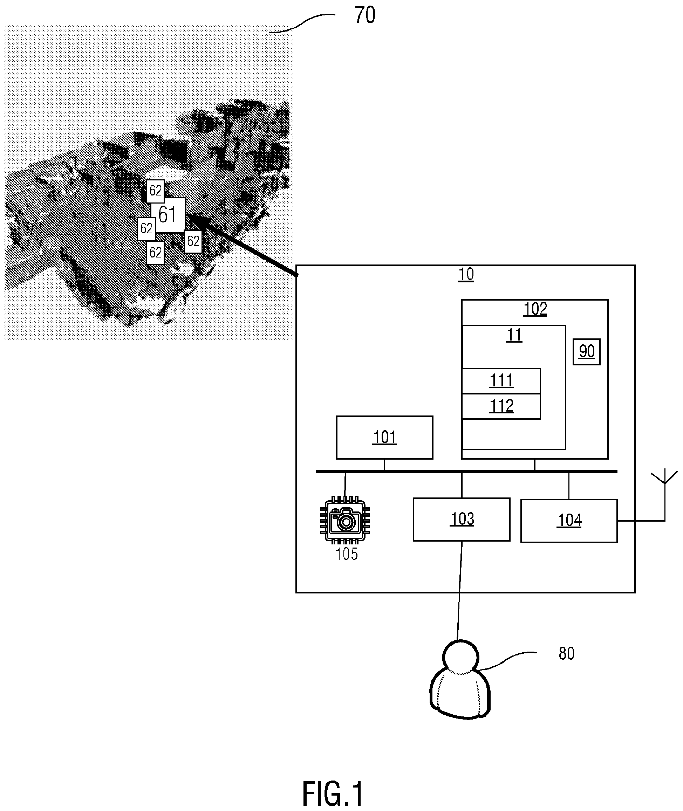

Now the present disclosure will be described hereinafter in details by referring to FIG.1 to FIG.8H.

FIG.1 depicts a block diagrams of an apparatus in accordance with one embodiment of the present disclosure. The apparatus 10 for vulnerability detection presented in the present disclosure can be a wireless portable apparatus, which can be hold by a user for device vulnerability detection. A user 80 can hold the apparatus 10 and enter the environment 70 and locate at a first location 61 to find devices and detect vulnerabilities. The apparatus 10's one exemplary structure is shown in FIG.1, including at least one memory 102, which can include computer-readable medium, such as a random access memory (RAM). The apparatus 10 also includes at least one processor 101, coupled with the at least one memory 102. Computer-executable instructions are stored in the at least one memory 102, and when executed by the at least one processor 101, can cause the at least one processor 101 to perform the steps described herein. The at least one processor 101 may include a microprocessor, an application specific integrated circuit (ASIC), a digital signal processor (DSP), a central processing unit (CPU), a graphics processing unit (GPU), state machines, etc. embodiments of computer-readable medium include, but not limited to a floppy disk, CD-ROM, magnetic disk, memory chip, ROM, RAM, an ASIC, a configured processor, all optical media, all magnetic tape or other magnetic media, or any other medium from which a computer processor can read instructions. Also, various other forms of computer-readable medium may transmit or carry instructions to a computer, including a router, private or public network, or other transmission device or channel, both wired and wireless. The instructions may include code from any computer-programming language, including, for example, C, C++, C#, Visual Basic, Java, and JavaScript.

The at least one memory 102 shown in FIG.1 can contain a vulnerability detection program 11, when executed by the at least one processor 101, causing the at least one processor 101 to execute the method 100 for vulnerability detection presented in the present disclosure.

To display the environment 70 and found devices' locations in the environment 70, a spatial model 90 can be acquired via at least one camera 105. Various 3D reconstruction solutions can be used here. Such solutions can include but not limited to SLAM(simultaneous localization and mapping). Environment 70 can be precepted via at least one camera 105, images captured by the at least one camera 105 can be processed to reconstruct the spatial model 90. The spatial model 90 can also be stored in the at least one memory 102.

To find devices in the environment 70 and detect their vulnerabilities, the apparatus 10 can conduct wireless communications via at least one wireless communication module 104, such as a WiFi network interface card, a 3G/4G/5G network interface card, etc. Optionally, there can be 2 WiFi network interface cards, one is for device locating, the other is for vulnerability detection.

The spatial model 90 and locations of found devices can be displayed on the user interface on a screen, an I/O component 103. Also, the user 80 can interact with the apparatus 10 via a microphone, a keyboard or a mouse, which are also I/O components 103. One embodiment is that the at least one I/O component 103 includes a touch panel, which can not only function as a display, but also interact with the user 80.

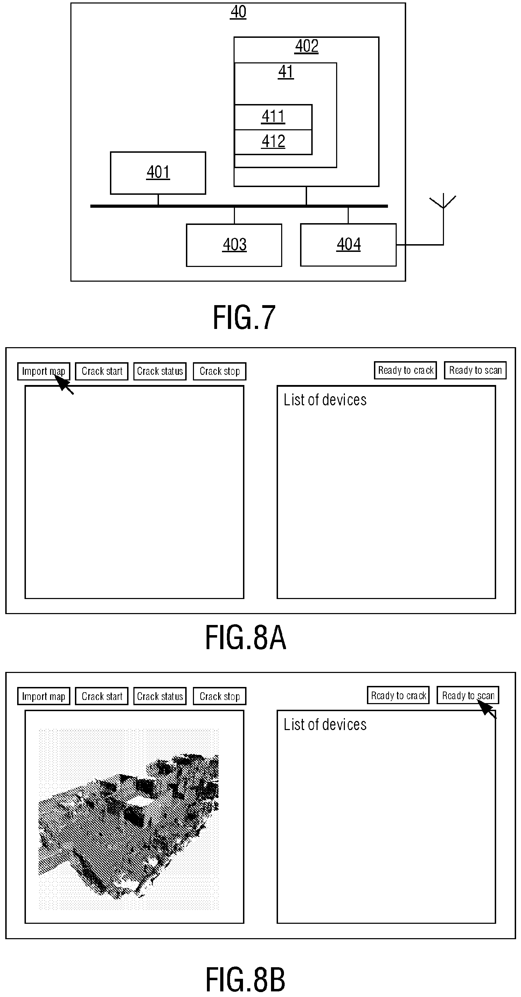

Taking touch panel as an example of I/O component 203, the vulnerability detection program 11 can be displayed as an icon on the touch panel 203. User 80 can launch the program 11 by double clicking the icon, then the user interface of the program 80 can be displayed, as shown in FIG.8A. Also, the user 80 can execute functions provided by the program 11 by operations on the user interface. The program 11 can include:
- a device locating module 111, configured to find and locate devices in the environment 70;
- a vulnerability detection module 112, configured to detect vulnerabilities in found devices.

Optionally, the device locating module 111 can be further configured to:
- acquire the spatial model 90 of the environment 70 under the user 80's request

For example, as shown in FIG.8A, the user 80 can click on the button "Import map" on the user interface, then the device locating module 111 can be triggered to generate the spatial model 90 of the environment 70 based on above mentioned method.
- display a map of the environment 70 based on the spatial model 90

After the special model 90 is generated, the device locating module 111 can generate the spatial model 90 and display the map based on the spatial model 90, as shown in FIG.8B. Optionally, the map of the environment 70 could be zoomed in and out and be rotated at will by the user 80 on the user interface.
- scan the environment 70 for devices

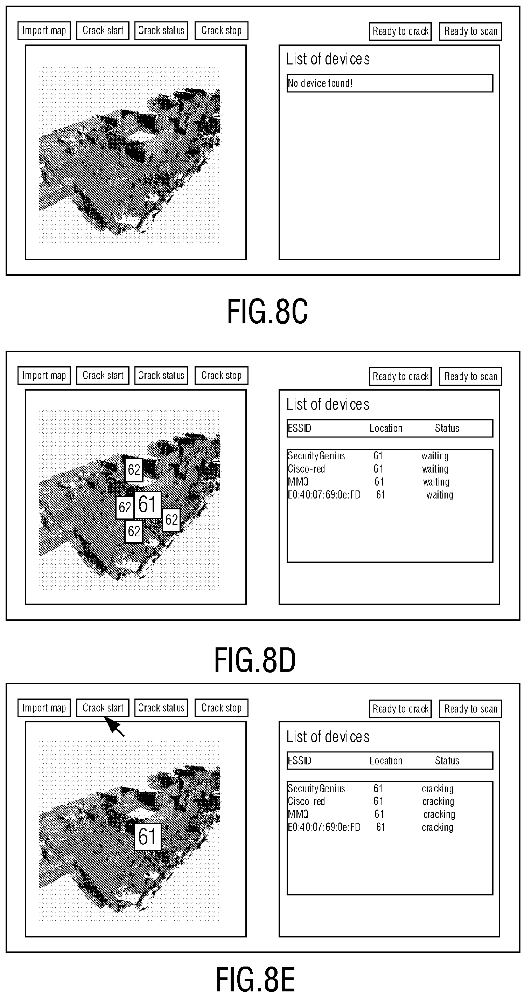

The device locating module 111 can automatically scan the environment 70 or under request by the user 80. Optionally, WiFi identification technology can be used. The user 80 can click on the button "Ready to scan" on the user interface, then the device locating module 111 will be triggered to detect devices via the wireless network card for wireless devices properties, such as ESSID(Extended Service Set Identifier), IP address, MAC address, NAME, etc. If no device is found, the device locating module 111 can display on the user interface following information: "No device found!" as shown in FIG.8C.

If a device is found, the device locating module 111 can mark the first location 61 on the map and display a list of found devices in association with the first location 61, as shown in FIG.8D. Status "waiting" means that corresponding device is waiting for vulnerability detection.

Optionally, the device locating module 111 can be further configured to determine a second location 62 of each found device based on the first location 61. The device locating module 11 can measure received wireless signal's strength and arriving angel from a specific device, and based on the first location 61, calculate the second location 62 of the specific device. And when displaying the list of found devices, display each found device at respective second location 62 on the map, as shown in FIG.8D. Also, on the right list of devices, each device's second location 62 can also be listed.

Then the user 80 can start detecting vulnerability in found devices, for example by clicking on the button "Crack start" on the interface. Then, the vulnerability detection module 112 can execute operations of vulnerability detection.

The vulnerability detection module 112 can be further configured to:
- detect vulnerabilities of the found devices

After the user 80 clicks on the button "Crack start", the vulnerability detection module 112 can be triggered to detect vulnerabilities of the found devices via the other wireless network card 104(if there are 2 wireless network cards), as shown in FIG.8E. Known vulnerabilities such as pmkid can be detected via attacks cracking. Optionally, the status of the found devices can be changed into "cracking".

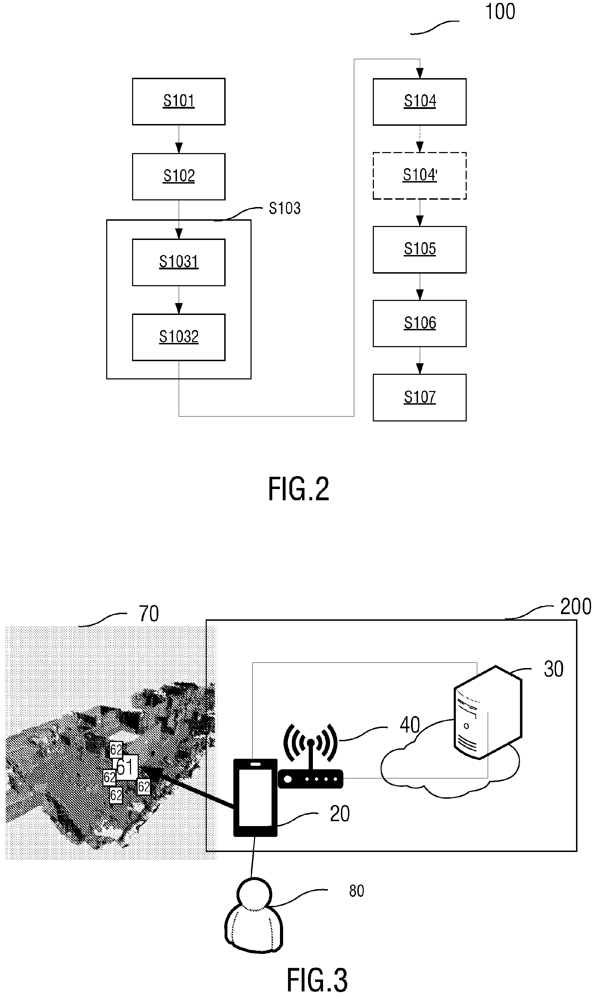

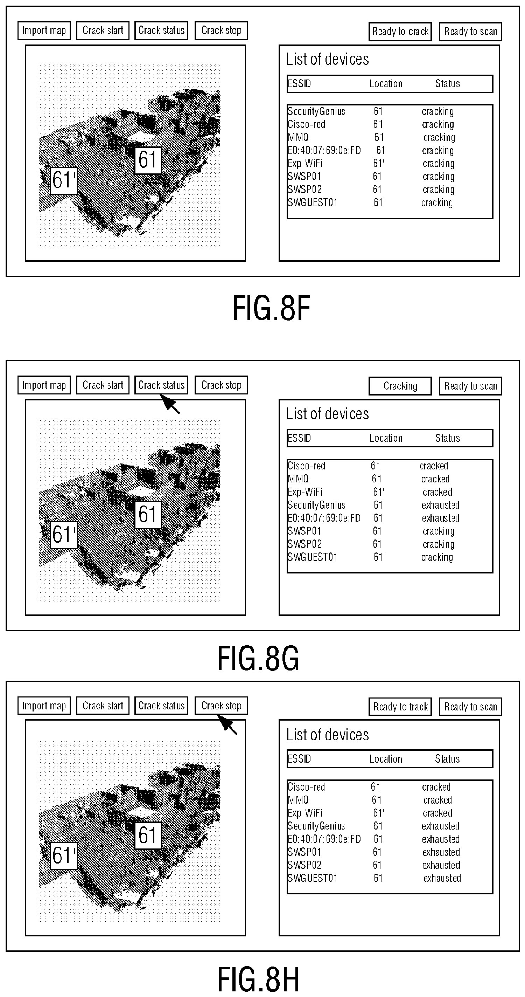

The user 80 can move to other locations in the environment 70, to find as many devices as he could to cover the whole environment 70. For example, as shown in FIG.8F, 3 more devices can be found at places 61' in the environment 70.
- display detected vulnerabilities of each found device

Optionally, the user 80 can click on the button "Crack status" on the user interface, then the vulnerability detection module 112 can be triggered to display results once detection is done as shown in FIG. 8G. The user 80 can click on the button "Crack stop" on the user interface, then the vulnerability detection module 112 can be triggered to stop detection and display final result, as shown in FIG.8H.

Although the device locating module 111, the vulnerability detection module 112 are described above as software modules of the vulnerability detection program 11. Alternatively, they can be implemented via hardware, such as ASIC chips. They can be integrated into one chip, or separately implemented and electrically connected.

It should be mentioned that the present disclosure may include apparatuses having different architecture than shown in FIG.1. The architecture above is merely exemplary and used to explain the exemplary method 100 shown in FIG.2.

Various methods in accordance with the present disclosure may be carried out. One exemplary method 100 according to the present disclosure includes following steps when the first wireless portable apparatus is at the first location 61 in the environment 70:
- S101: acquiring a spatial model of the environment 70;
- S102: displaying a map of the environment 70 based on the spatial model;
- S103: scanning the environment 70 for devices;

Optionally, the step S103 scanning the environment 70 for devices can further include following substeps:
- S 1031: scanning the environment 70 via a WiFi network card for devices;
- S1032:acquiring a WiFi list in the environment 70, wherein the WiFi list includes the list of the found devices.

The method 100 can further include following steps:
- S104: marking the first location 61 on the map if a device is found;
- S105:displaying a list of found devices in association with the first location 61;
- S106: detecting vulnerabilities of the found devices;
- S107: displaying detected vulnerabilities of each found device.

Optionally, the method 100 can further include: step S104', determining a second location 62 of each found device based on the first location 61; then the step S105 displaying a list of found devices in association with the first location 61 can further include: displaying each found device at the respective second location 62 on the map.

Other details of the method 100 can be referred to above description to the apparatus 10 in combination with FIG.8A to FIG.8H.

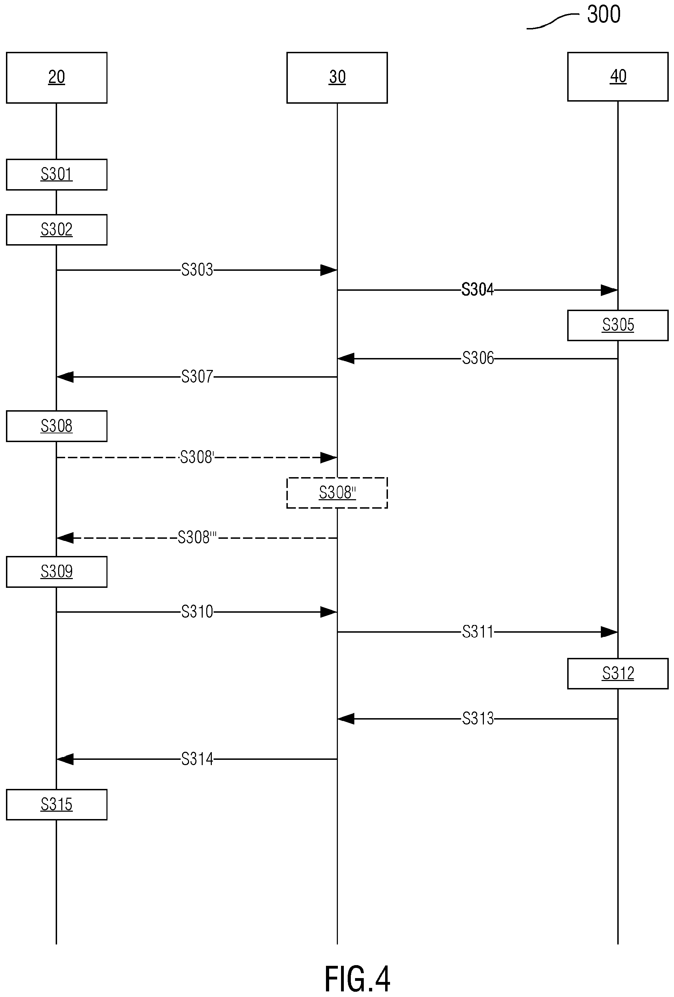

The first wireless portable apparatus 10 for locating devices and detecting vulnerability and method 100 executed by the apparatus 10 are introduced. User can hold the apparatus to detect vulnerabilities of wireless devices in an environment and display with intuitive and exact locations of devices. Similar functions can also be implemented via multiple devices and server, as shown in FIG.3 and FIG.4, by system 200.

FIG.3 depicts a block diagram of the system 200 and FIG.4 depicts a flow diagram of a method 300 which can be executed by the system 200.

As shown in FIG.3, the system 200 can include:
- a second wireless portable apparatus 20 at a first location 61 in an environment 70,
- a third wireless portable apparatus 40 at the first location 61 in an environment 70, and
- a cloud server 30.

The second wireless portable apparatus 20 can be configured to: acquire a spatial model of an environment 70, display a map of the environment 70 based on the spatial model, and send a first indication to a cloud server 30, indicating scanning the environment 70 for devices.

The cloud server 30 can be configured to: receive the first indication from the second wireless portable apparatus 20, send a fifth indication to the third wireless portable apparatus 40, indicating scanning the environment 70 for devices.

The third wireless portable apparatus 40 can be configured to: receive the fifth indication, scan the environment 70 for devices, and send scanning result to the cloud server 30, wherein the scanning result includes a list of found devices.

The cloud server 30 can be further configured to: receive the scanning result, send the scanning result to the second wireless portable apparatus 20.

The second wireless portable apparatus 20 can be further configured to: mark the first location 61 on the map if there is a device in the list, display the list of the found devices in association with the first location 61, send a second indication to the cloud server 30, indicating detecting vulnerabilities of the found devices.

The cloud server 30 can be further configured to: receive the second indication, send a sixth indication to the third wireless portable apparatus 40, indicating detecting vulnerabilities of the found devices.

The third wireless portable apparatus 40 can be further configured to: receive the sixth indication, detect vulnerabilities of the found devices, send detection result to the cloud server 30, wherein the detection result includes a list of detected vulnerabilities of each found device.

The cloud server 30 can be further configured to: receive the detection result, send the detection result to the second wireless portable apparatus 20.

The second wireless portable apparatus 20 can be further configured to: receive the detection result and display the detected vulnerabilities of each found device.

Optionally, the second wireless portable apparatus 20 can be further configured to send a third indication to the cloud server 30, indicating the first location 61; and the cloud server 30 can be further configured to: receive the third indication, determine a second location 62 of each found device based on the first location 61 and send a fourth indication to the first wireless portable apparatus 10, indicating each second location 62; the second wireless portable apparatus 20 can be further configured to: receive the fourth indication, and display each found device at the respective second location 62 on the map.

Optionally, when scanning the environment 70 for devices, the third wireless portable apparatus 40 can be further configured to: scan the environment 70 via a WiFi network card for devices; acquire a WiFi list in the environment 70, wherein the WiFi list includes the list of the found devices.

With interaction between the second wireless portable apparatus 20, the cloud server 30 and the third wireless portable apparatus 40, same functions by the first wireless portable apparatus 10 can be implemented. So, the details of the system 200 can also be referred to the description to the first apparatus 10 and the method 100.

Optionally, an application program can be run on the second wireless portable apparatus 20, which serves as a Web client, communicating with a Web server deployed on the cloud server 30. A user 80 can interact on the Web client, requesting to locate devices and detect vulnerabilities. The user 80's request can be sent to the web server on the cloud server 30, then the cloud server 30 can conduct locating devices and detecting vulnerabilities via the third wireless portable apparatus 40. The web client can take advantage of other applications launched on the second wireless portable apparatus for special model generation, the generated 3D model can be loaded by the web client to display on user interface and mark the first location 61 and possibly second locations 62.

Optionally, there could be 2 wireless network cards on the third wireless portable apparatus 40, one for locating devices, the other for detecting vulnerabilities. There could also be another wireless network card via which the third wireless portable apparatus 40 can communicate with the cloud server 30.

FIG.4 shows interactions between apparatuses in the system 200. As shown in FIG4, there could be following steps when the second wireless portable apparatus 20 is at a first location 61 in an environment 70:
- S301: acquiring a spatial model of the environment 70 by the second wireless portable apparatus 20;
- S302: displaying a map of the environment 70 based on the spatial model by the second wireless portable apparatus 20;
- S303: sending a first indication to a cloud server 30, indicating scanning the environment 70 for devices by the second wireless portable apparatus 20;
- S304: after receiving the first indication in the step S303, sending a fifth indication to the third wireless portable apparatus 40 by the cloud server 30, indicating scanning the environment 70 for devices;
- S305: after receiving the fifth indication, scanning the environment 70 for devices by the third wireless portable apparatus 40; optionally, the third wireless portable apparatus 40 can scan the environment 70 via a WiFi network card for devices, and acquire a WiFi list in the environment 70, wherein the WiFi list includes the list of the found devices.
- S306: sending scanning result to the cloud server 30 by the third wireless portable apparatus 40, wherein the scanning result includes a list of found devices;
- S307: after receiving the scanning result, sending the scanning result to the second wireless portable apparatus 20 by the cloud server 30;
- S308: after receiving the scanning result, marking the first location 61 on the map if there is a device in the list by the second wireless portable apparatus 20;
- S309: displaying the list of the found devices in association with the first location 61 by the second wireless portable apparatus 20;
- S310: sending a second indication to the cloud server 30, indicating detecting vulnerabilities of the found devices by the second wireless portable apparatus 20;
- S311: after receiving the second indication, sending a sixth indication to the third wireless portable apparatus 40 by the cloud server 30, indicating detecting vulnerabilities of the found devices;
- S312: after receiving the sixth indication, detecting S312 vulnerabilities of the found devices by the third wireless portable apparatus 40;
- S313: sending detection result to the cloud server 30 by the third wireless portable apparatus 40, wherein the detection result includes a list of detected vulnerabilities of each found device.
- S314: after receiving the detection result, sending the detection result to the second wireless portable apparatus 20 by the cloud server 30.
- S315: after receiving the detection result, displaying detected vulnerabilities of each found device by the second wireless portable apparatus 20.

Optionally, the method 300 can further include following steps:
- S308': sending a third indication to the cloud server 30 by the second wireless portable apparatus 20, indicating the first location 61;
- S308" : after receiving the third indication, determining a second location 62 of each found device based on the first location 61 by the cloud server 30;
- S308‴ : sending a fourth indication to the second wireless portable apparatus 20 by the cloud server 30, indicating each second location 62.

Then in the step S309, the second wireless portable apparatus 20 can displaying each found device at the respective second location 62 on the map.

Details of the method 300 and system 200 can be referred to in corresponding parts of the method 20 and the first wireless portable apparatus 10. Differences lie in the division of functions by 3 apparatuses of the first wireless portable apparatus 20.

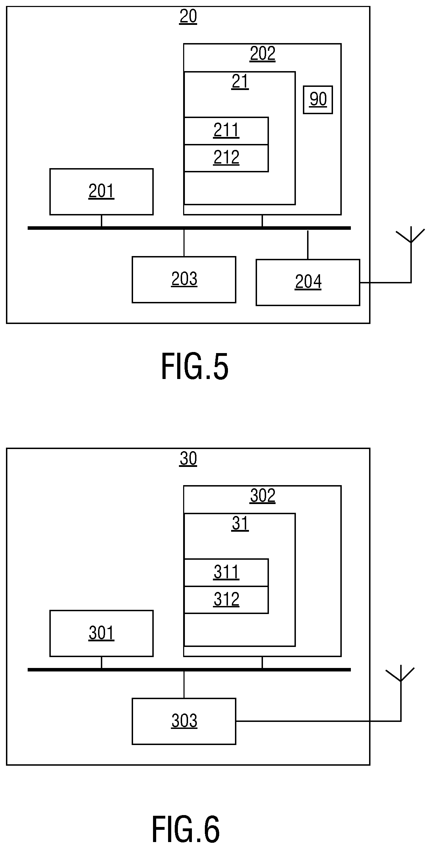

Exemplary structures of the second wireless portable apparatus 20, the cloud server 30, the third wireless portable apparatus 40 are shown respectively in FIG.5, FIG.6 and FIG.7.

FIG.5 depicts a block diagrams of the second wireless portable apparatus 20 in accordance with one embodiment of the present disclosure. The apparatus 20 can be hold by the user 80,entering the environment 70 and locating at a first location 61 to find devices and detect vulnerabilities. The apparatus 20's one exemplary structure can include at least one memory 202, containing a vulnerability detection program 21, when executed by the at least one processor 201, causing the at least one processor 201 to execute the method 200 at the side of the apparatus 20.

The apparatus 20 can also include at least one camera 205, via which a spatial model 90 can be acquired. The spatial model 90 can also be stored in the at least one memory 202.

The apparatus 20 can conduct wireless communications with the cloud server 30 via at least one wireless communication module 204, such as a WiFi network interface card, a 3G/4G/5G network interface card, etc.

The spatial model 90 and locations of found devices can be displayed on the user interface on a screen, an I/O component 203. Also, the user 80 can interact with the apparatus 20 via a microphone, a keyboard or a mouse, which are also I/O components 203. One embodiment is that the at least one I/O component 203 includes a touch panel, which can not only function as a display, but also interact with the user 80.

Taking touch panel as an example of I/O component 203, the vulnerability detection program 21 can be displayed as an icon on the touch panel 203. User 80 can launch the program 21 by double clicking the icon, then the user interface of the program 21 can be displayed, as shown in FIG.8A. Also, the user 80 can execute functions provided by the program 21 by operations on the user interface. The apparatus 20 can have same designs of the user interfaces during the locating and detecting, as shown in FIG.8A~FIG.8H. The program 21 can include:
- a device locating module 211, configured to find and locate devices in the environment 70;
- a vulnerability detection module 212, configured to detect vulnerabilities in found devices.

Although the device locating module 211, the vulnerability detection module 212 are described above as software modules of the vulnerability detection program 21. Alternatively, they can be implemented via hardware, such as ASIC chips. They can be integrated into one chip, or separately implemented and electrically connected.

It should be mentioned that the present disclosure may include apparatuses having different architecture than shown in FIG.5. The architecture above is merely exemplary and used to explain the exemplary method 200 shown in FIG.4.

Various structures of the components can be referred to the structure of the first wireless portable apparatus 10.

Details of the device locating module 211, the vulnerability detection module 212 can be referred to steps mentioned at the side of apparatus 20 in method 200.

FIG.6 depicts a block diagrams of the cloud server 30 in accordance with one embodiment of the present disclosure. The cloud server 30's one exemplary structure can include at least one memory 302, containing a vulnerability detection program 31, when executed by the at least one processor 301, causing the at least one processor 301 to execute the method 300 at the side of the cloud server 30.

The cloud server 30 can conduct wireless communications with the second wireless portable apparatus 20 and the third wireless portable apparatus 40 via at least one wireless communication module 304, such as a WiFi network interface card, a 3G/4G/5G network interface card, etc.

The program 31 can include:
- a device locating module 311, configured to find and locate devices in the environment 70;
- a vulnerability detection module 312, configured to detect vulnerabilities in found devices.

Although the device locating module 311, the vulnerability detection module 312 are described above as software modules of the vulnerability detection program 31. Alternatively, they can be implemented via hardware, such as ASIC chips. They can be integrated into one chip, or separately implemented and electrically connected.

It should be mentioned that the present disclosure may include apparatuses having different architecture than shown in FIG.6. The architecture above is merely exemplary and used to explain the exemplary method 300 shown in FIG.4.

Various structures of the components can be referred to the structure of the first wireless portable apparatus 10.

Details of the device locating module 311, the vulnerability detection module 312 can be referred to steps mentioned at the side of cloud server 30 in the method 300.

FIG.7 depicts a block diagram of the third wireless portable apparatus 40 in accordance with one embodiment of the present disclosure. The apparatus 40 can be held by the user 80,entering the environment 70 and locating at a first location 61 to find devices and detect vulnerabilities. The apparatus 40's one exemplary structure can include at least one memory 402, containing a vulnerability detection program 41, when executed by the at least one processor 401, causing the at least one processor 401 to execute the method 400 at the side of the apparatus 40.

The apparatus 40 can include at least one wireless communication module 404. Optionally, it can include 2 WiFi network interface cards, one is for device locating, the other is for vulnerability detection. The apparatus 40 can conduct wireless communications with the cloud server 30 via another wireless communication module 404, such as a WiFi network interface card, a 3G/4G/5G network interface card, etc.

The program 41 can include:
- a device locating module 411, configured to find and locate devices in the environment 70;
- a vulnerability detection module 412, configured to detect vulnerabilities in found devices.

Although the device locating module 411, the vulnerability detection module 412 are described above as software modules of the vulnerability detection program 41. Alternatively, they can be implemented via hardware, such as ASIC chips. They can be integrated into one chip, or separately implemented and electrically connected.

It should be mentioned that the present disclosure may include apparatuses having different architecture than shown in FIG.7. The architecture above is merely exemplary and used to explain the exemplary method 400 shown in FIG.4.

Various structures of the components can be referred to the structure of the first wireless portable apparatus 10.

Details of the device locating module 411, the vulnerability detection module 412 can be referred to steps mentioned at the side of apparatus 40 in method 400.

A computer-readable medium is also provided in the present disclosure, storing computer-executable instructions, which upon execution by a computer, enables the computer to execute any of the methods presented in this disclosure.

A computer program, which is being executed by at least one processor and performs any of the methods presented in this disclosure.

While the present disclosure has been described in detail with reference to certain embodiments, it should be appreciated that the present disclosure is not limited to those precise embodiments. Rather, in view of the present disclosure which describes exemplary modes for practicing the invention, many modifications and variations would present themselves, to those skilled in the art without departing from the scope of this invention. The scope of the invention is, therefore, indicated by the following claims rather than by the foregoing description.

## Claims

1. A method (100) for vulnerability detection using a first wireless portable apparatus (10), comprising, when the first wireless portable apparatus is at a first location (61) in an environment (70):
- acquiring (S101), by the first wireless portable apparatus (10), a spatial model (90) of the environment (70), wherein the spatial model is acquired using at least one camera (105) of the first wireless portable apparatus (10), wherein the at least one camera (105) is configured to capture images and to process them to reconstruct the spatial model (90);
- displaying (S102), by the first wireless portable apparatus (10) on a user interface on a screen, a map of the environment (70) based on the acquired spatial model (90);
- scanning (S103), by the first wireless portable apparatus (10), the environment (70) for devices by conducting wireless communication;
- marking (S104), by the first wireless portable apparatus (10), the first location (61) on the map if a device is found;
- displaying (S105), by the first wireless portable apparatus (10), a list of found devices in association with the first location (61);
- detecting (S106), by the first wireless portable apparatus (10), vulnerabilities of the found devices;
- displaying (S107), by the first wireless portable apparatus (10) on the user interface on the screen, detected vulnerabilities of each found device.

2. The method (100) according to claim 1, wherein
- the method further comprises determining (S104') a second location (62) of each found device based on the first location (61);
- displaying (S105) a list of found devices in association with the first location (61) comprises: displaying each found device at the respective second location (62) on the map.

3. The method (100) according to claim 1, wherein scanning (S103) the environment (70) for devices further comprises:
- scanning (S1031) the environment (70) by conducting wireless communication via a WiFi network card for devices;
- acquiring (S1032) a WiFi list in the environment(70), wherein the WiFi list includes the list of the found devices.

4. A method (300) for vulnerability detection using a second wireless portable apparatus (20), comprising, when the second wireless portable apparatus (20) is at a first location (61) in an environment (70):
- acquiring(S301), by the second wireless portable apparatus (20), a spatial model of the environment (70), wherein the spatial model is acquired using at least one camera (105) of the second wireless portable apparatus (20), wherein the at least one camera (105) is configured to capture images and to process them to reconstruct the spatial model (90);
- displaying (S302), by the second wireless portable apparatus (20) on a user interface on a screen, a map of the environment (70) based on the spatial model;
- sending (S303), by the second wireless portable apparatus (20), a first indication to a cloud server (30), indicating scanning the environment (70) for devices;
- receiving (S307), by the second wireless portable apparatus (20), scanning result from the cloud server (30), wherein the scanning result includes a list of found devices;
- marking (S308), by the second wireless portable apparatus (20), the first location (61) on the map if there is a device in the list;
- displaying (S309), by the second wireless portable apparatus (20) on the user interface on the screen, the list of the found devices in association with the first location (61);
- sending (S310), by the second wireless portable apparatus (20), a second indication to the cloud server (30), indicating detecting vulnerabilities of the found devices;
- receiving (S314), by the second wireless portable apparatus (20), detection result from the cloud server (30), wherein the detection result includes a list of detected vulnerabilities of each found device;
- displaying (S315), by the second wireless portable apparatus (20) on a user interface on a screen, detected vulnerabilities of each found device.

5. The method according to claim 4 further comprises:
- sending (S308') a third indication to the cloud server (30), indicating the first location (61);
- receiving (S308‴) a fourth indication from the cloud server (30), indicating a second location (62) of each found device determined based on the first location (61);
- displaying (S309) the list of the found devices in association with the first location (61) comprises: displaying each found device at the respective second location (62) on the map.

6. A system (200) for vulnerability detection, comprising: a second wireless portable apparatus (20) at a first location (61) in an environment (70), a third wireless portable apparatus (40) at the first location (61) in an environment (70) and a cloud server (30), wherein,
- the second wireless portable apparatus (20) is configured to:
- acquire a spatial model of an environment(70) by using at least one camera (105) of the second wireless portable apparatus (20), wherein the at least one camera (105) is further configured to capture images and to process them to reconstruct the spatial model (90);
- display on a user interface on a screen of the second wireless portable apparatus (20) a map of the environment (70) based on the acquired spatial model;
- send a first indication to a cloud server (30), indicating scanning the environment (70) for devices;
- the cloud server (30) is configured to:
- receive the first indication from the second wireless portable apparatus (20);
- send a fifth indication to the third wireless portable apparatus (40), indicating scanning the environment (70) for devices;
- the third wireless portable apparatus (40) is configured to:
- receive the fifth indication;
- scan the environment (70) for devices by conducting wireless communication;
- send scanning result to the cloud server (30), wherein the scanning result includes a list of found devices;
- the cloud server (30) is further configured to:
- receive the scanning result;
- send the scanning result to the second wireless portable apparatus (20);
- the second wireless portable apparatus (20) is further configured to:
- mark the first location (61) on the map if there is a device in the list;
- display on the user interface on the screen the list of the found devices in association with the first location(61);
- send a second indication to the cloud server (30), indicating detecting vulnerabilities of the found devices;
- the cloud server (30) is further configured to:
- receive the second indication;
- send a sixth indication to the third wireless portable apparatus (40), indicating detecting vulnerabilities of the found devices;
- the third wireless portable apparatus (40) is further configured to:
- receive the sixth indication;
- detect vulnerabilities of the found devices;
- send detection result to the cloud server (30), wherein the detection result includes a list of detected vulnerabilities of each found device;
- the cloud server (30) is further configured to:
- receive the detection result;
- send the detection result to the second wireless portable apparatus (20);
- the second wireless portable apparatus (20) is further configured to:
- receive the detection result;
- display on the user interface on the screen the detected vulnerabilities of each found device.

7. The system according to claim 6, wherein,
- the second wireless portable apparatus (20) is further configured to send a third indication to the cloud server (30), indicating the first location (61);
- the cloud server (30) is further configured to:
- receive the third indication;
- determine a second location (62) of each found device based on the first location (61);
- send a fourth indication to the first wireless portable apparatus (10), indicating each second location (62);
- the second wireless portable apparatus (20) is further configured to:
- receive the fourth indication;
- display each found device at the respective second location (62) on the map.

8. the system according to claim 6, wherein when scanning the environment(70) for devices the third wireless portable apparatus (40) is further configured to:
- scan the environment (70) via a WiFi network card for devices;
- acquire a WiFi list in the environment(70), wherein the WiFi list includes the list of the found devices.

9. An apparatus (10,20,30,40) for vulnerability detection, comprising modules configured to execute the method according any of claims 1-5.

10. A computer-readable medium for vulnerability detection, storing computer-executable instructions, wherein the computer-executable instructions when executed cause at least one processor to execute method according to any of claims 1-5.

## Patentansprüche

1. Verfahren (100) zur Schwachstellendetektion unter Verwendung einer ersten drahtlosen tragbaren Einrichtung (10), umfassend, wenn sich die erste drahtlose tragbare Einrichtung an einem ersten Standort (61) in einer Umgebung (70) befindet:
- Erfassen (S101), durch die erste drahtlose tragbare Einrichtung (10), eines räumlichen Modells (90) der Umgebung (70), wobei das räumliche Modell unter Verwendung mindestens einer Kamera (105) der ersten drahtlosen tragbaren Einrichtung (10) erfasst wird, wobei die mindestens eine Kamera (105) dazu ausgelegt ist, Bilder aufzunehmen und sie zu verarbeiten, um das räumliche Modell (90) zu rekonstruieren;
- Anzeigen (S102), durch die erste drahtlose tragbare Einrichtung (10) auf einer Benutzeroberfläche auf einem Bildschirm, einer Karte der Umgebung (70) basierend auf dem erfassten räumlichen Modell (90);
- Scannen (S103), durch die erste drahtlose tragbare Einrichtung (10), der Umgebung (70) nach Vorrichtungen durch Durchführen von drahtloser Kommunikation;
- Markieren (S104), durch die erste drahtlose tragbare Einrichtung (10), des ersten Standorts (61) auf der Karte, wenn eine Vorrichtung gefunden wird;
- Anzeigen (S105), durch die erste drahtlose tragbare Einrichtung (10), einer Liste gefundener Vorrichtungen in Verbindung mit dem ersten Standort (61);
- Detektieren (S106), durch die erste drahtlose tragbare Einrichtung (10), von Schwachstellen der gefundenen Vorrichtungen;
- Anzeigen (S107), durch die erste drahtlose tragbare Einrichtung (10) auf der Benutzeroberfläche auf dem Bildschirm, detektierter Schwachstellen jeder gefundenen Vorrichtung.

2. Verfahren (100) nach Anspruch 1, wobei
- das Verfahren ferner Bestimmen (S104') eines zweiten Standorts (62) jeder gefundenen Vorrichtung basierend auf dem ersten Standort (61) umfasst;
- das Anzeigen (S105) einer Liste gefundener Vorrichtungen in Verbindung mit dem ersten Standort (61) Folgendes umfasst: Anzeigen jeder gefundenen Vorrichtung an dem jeweiligen zweiten Standort (62) auf der Karte.

3. Verfahren (100) nach Anspruch 1, wobei das Scannen (S103) der Umgebung (70) nach Vorrichtungen ferner Folgendes umfasst:
- Scannen (S1031) der Umgebung (70) durch Durchführen von drahtloser Kommunikation über eine WiFi-Netzwerkkarte nach Vorrichtungen;
- Erfassen (S1032) einer WiFi-Liste in der Umgebung (70), wobei die WiFi-Liste die Liste der gefundenen Vorrichtungen beinhaltet.

4. Verfahren (300) zur Schwachstellendetektion unter Verwendung einer zweiten drahtlosen tragbaren Einrichtung (20), umfassend, wenn sich die zweite drahtlose tragbare Einrichtung (20) an einem ersten Standort (61) in einer Umgebung (70) befindet:
- Erfassen (S301), durch die zweite drahtlose tragbare Einrichtung (20), eines räumlichen Modells der Umgebung (70), wobei das räumliche Modell unter Verwendung mindestens einer Kamera (105) der zweiten drahtlosen tragbaren Einrichtung (20) erfasst wird, wobei die mindestens eine Kamera (105) dazu ausgelegt ist, Bilder aufzunehmen und sie zu verarbeiten, um das räumliche Modell (90) zu rekonstruieren;
- Anzeigen (S302), durch die zweite drahtlose tragbare Einrichtung (20) auf einer Benutzeroberfläche auf einem Bildschirm, einer Karte der Umgebung (70) basierend auf dem räumlichen Modell;
- Senden (S303), durch die zweite drahtlose tragbare Einrichtung (20), einer ersten Angabe an einen Cloud-Server (30), die das Scannen der Umgebung (70) nach Vorrichtungen angibt;
- Empfangen (S307), durch die zweite drahtlose tragbare Einrichtung (20), eines Scanergebnisses von dem Cloud-Server (30), wobei das Scanergebnis eine Liste gefundener Vorrichtungen beinhaltet;
- Markieren (S308), durch die zweite drahtlose tragbare Einrichtung (20), des ersten Standorts (61) auf der Karte, wenn sich eine Vorrichtung in der Liste befindet;
- Anzeigen (S309), durch die zweite drahtlose tragbare Einrichtung (20) auf der Benutzeroberfläche auf dem Bildschirm, der Liste der gefundenen Vorrichtungen in Verbindung mit dem ersten Standort (61);
- Senden (S310), durch die zweite drahtlose tragbare Einrichtung (20), einer zweiten Angabe an den Cloud-Server (30), die das Detektieren von Schwachstellen der gefundenen Vorrichtungen angibt;
- Empfangen (S314), durch die zweite drahtlose tragbare Einrichtung (20), eines Detektionsergebnisses von dem Cloud-Server (30), wobei das Detektionsergebnis eine Liste detektierter Schwachstellen jeder gefundenen Vorrichtung beinhaltet;
- Anzeigen (S315), durch die zweite drahtlose tragbare Einrichtung (20) auf einer Benutzeroberfläche auf einem Bildschirm, detektierter Schwachstellen jeder gefundenen Vorrichtung.

5. Verfahren nach Anspruch 4, das ferner Folgendes umfasst:
- Senden (S308') einer dritten Angabe an den Cloud-Server (30), die den ersten Standort angibt (61);
- Empfangen (S308‴) einer vierten Angabe von dem Cloud-Server (30), die einen zweiten Standort (62) jeder gefundenen Vorrichtung angibt, der basierend auf dem ersten Standort (61) bestimmt wird;
- das Anzeigen (S309) der Liste der gefundenen Vorrichtungen in Verbindung mit dem ersten Standort (61) umfasst Folgendes: Anzeigen jeder gefundenen Vorrichtung an dem jeweiligen zweiten Standort (62) auf der Karte.

6. System (200) zur Schwachstellendetektion, das Folgendes umfasst: eine zweite drahtlose tragbare Einrichtung (20) an einem ersten Standort (61) in einer Umgebung (70), eine dritte drahtlose tragbare Einrichtung (40) an dem ersten Standort (61) in einer Umgebung (70) und einen Cloud-Server (30), wobei
- die zweite drahtlose tragbare Einrichtung (20) zu Folgendem ausgelegt ist:
- Erfassen eines räumlichen Modells einer Umgebung (70) unter Verwendung mindestens einer Kamera (105) der zweiten drahtlosen tragbaren Einrichtung (20) erfasst wird, wobei die mindestens eine Kamera (105) ferner dazu ausgelegt ist, Bilder aufzunehmen und sie zu verarbeiten, um das räumliche Modell (90) zu rekonstruieren;
- Anzeigen, auf einer Benutzeroberfläche auf einem Bildschirm der zweiten drahtlosen tragbaren Einrichtung (20), einer Karte der Umgebung (70) basierend auf dem erfassten räumlichen Modell;
- Senden einer ersten Angabe an einen Cloud-Server (30), die das Scannen der Umgebung (70) nach Vorrichtungen angibt;
- der Cloud-Server (30) zu Folgendem ausgelegt ist:
- Empfangen der ersten Angabe von der zweiten drahtlosen tragbaren Einrichtung (20);
- Senden einer fünften Angabe an die dritte drahtlose tragbare Einrichtung (40), die das Scannen der Umgebung (70) nach Vorrichtungen angibt;
- die dritte drahtlose tragbare Einrichtung (40) zu Folgendem ausgelegt ist:
- Empfangen der fünften Angabe;
- Scannen der Umgebung (70) nach Vorrichtungen durch Durchführen von drahtloser Kommunikation;
- Senden eines Scanergebnisses an den Cloud-Server (30), wobei das Scanergebnis eine Liste gefundener Vorrichtungen beinhaltet;
- der Cloud-Server (30) ferner zu Folgendem ausgelegt ist:
- Empfangen des Scanergebnisses;
- Senden des Scanergebnisses an die zweite drahtlose tragbare Einrichtung (20);
- die zweite drahtlose tragbare Einrichtung (20) ferner zu Folgendem ausgelegt ist:
- Markieren des ersten Standorts (61) auf der Karte, wenn sich eine Vorrichtung in der Liste befindet;
- Anzeigen, auf der Benutzeroberfläche auf dem Bildschirm, der Liste der gefundenen Vorrichtungen in Verbindung mit dem ersten Standort (61);
- Senden einer zweiten Angabe an den Cloud-Server (30), die das Detektieren von Schwachstellen der gefundenen Vorrichtungen angibt;
- der Cloud-Server (30) ferner zu Folgendem ausgelegt ist:
- Empfangen der zweiten Angabe;
- Senden einer sechsten Angabe an die dritte drahtlose tragbare Einrichtung (40), die das Detektieren von Schwachstellen der gefundenen Vorrichtungen angibt;
- die dritte drahtlose tragbare Einrichtung (40) ferner zu Folgendem ausgelegt ist:
- Empfangen der sechsten Angabe;
- Detektieren von Schwachstellen der gefundenen Vorrichtungen;
- Senden eines Detektionsergebnisses an den Cloud-Server (30), wobei das Detektionsergebnis eine Liste detektierter Schwachstellen jeder gefundenen Vorrichtung beinhaltet;
- der Cloud-Server (30) ferner zu Folgendem ausgelegt ist:
- Empfangen des Detektionsergebnisses;
- Senden des Detektionsergebnisses an die zweite drahtlose tragbare Einrichtung (20);
- die zweite drahtlose tragbare Einrichtung (20) ferner zu Folgendem ausgelegt ist:
- Empfangen des Detektionsergebnisses;
- Anzeigen, auf der Benutzeroberfläche auf dem Bildschirm, der detektierten Schwachstellen jeder gefundenen Vorrichtung.

7. System nach Anspruch 6, wobei
- die zweite drahtlose tragbare Einrichtung (20) ferner dazu ausgelegt ist, eine dritte Angabe an den Cloud-Server (30) zu senden, die den ersten Standort (61) angibt;
- der Cloud-Server (30) ferner zu Folgendem ausgelegt ist:
- Empfangen der dritten Angabe;
- Bestimmen eines zweiten Standorts (62) jeder gefundenen Vorrichtung basierend auf dem ersten Standort (61);
- Senden einer vierten Angabe an die erste drahtlose tragbare Einrichtung (10), die jeden zweiten Standort (62) angibt;
- die zweite drahtlose tragbare Einrichtung (20) ferner zu Folgendem ausgelegt ist:
- Empfangen der vierten Angabe;
- Anzeigen jeder gefundenen Vorrichtung an der jeweiligen zweiten Position (62) auf der Karte.

8. System nach Anspruch 6, wobei die dritte drahtlose tragbare Einrichtung (40) beim Scannen der Umgebung (70) nach Vorrichtungen ferner zu Folgendem ausgelegt ist:
- Scannen der Umgebung (70) über eine WiFi-Netzwerkkarte nach Vorrichtungen;
- Erfassen einer WiFi-Liste in der Umgebung (70), wobei die WiFi-Liste die Liste der gefundenen Vorrichtungen beinhaltet.

9. Einrichtung (10, 20, 30, 40) zur Schwachstellendetektion, die Module umfasst, die dazu ausgelegt sind, das Verfahren nach einem der Ansprüche 1-5 auszuführen.

10. Computerlesbares Medium zur Schwachstellendetektion, das computerausführbare Anweisungen speichert, wobei die computerausführbaren Anweisungen bei Ausführung bewirken, dass mindestens ein Prozessor ein Verfahren nach einem der Ansprüche 1-5 ausführt.

## Revendications

1. Procédé (100) pour la détection de vulnérabilité à l'aide d'un premier appareil portable sans fil (10), comprenant, lorsque le premier appareil portable sans fil est à un premier emplacement (61) dans un environnement (70) :
- l'acquisition (S101), par le premier appareil portable sans fil (10), d'un modèle spatial (90) de l'environnement (70), dans lequel le modèle spatial est acquis à l'aide d'au moins une caméra (105) du premier appareil portable sans fil (10), dans lequel ladite au moins une caméra (105) est configurée pour capturer des images et pour les traiter afin de reconstruire le modèle spatial (90) ;
- l'affichage (S102), par le premier appareil portable sans fil (10) sur une interface utilisateur, sur un écran, d'une carte de l'environnement (70) basée sur le modèle spatial (90) acquis ;
- le balayage (S103), par le premier appareil portable sans fil (10), de l'environnement (70) de dispositifs en effectuant une communication sans fil ;
- le marquage (S104), par le premier appareil portable sans fil (10), du premier emplacement (61) sur la carte si un dispositif est trouvé ;
- l'affichage (S105), par le premier appareil portable sans fil (10), d'une liste de dispositifs trouvés en association avec le premier emplacement (61) ;
- la détection (S106), par le premier appareil portable sans fil (10), de vulnérabilités des dispositifs trouvés ;
- l'affichage (S107), par le premier appareil portable sans fil (10) sur l'interface utilisateur, sur l'écran, de vulnérabilités détectées de chaque dispositif trouvé.

2. Procédé (100) selon la revendication 1, dans lequel
- le procédé comprend en outre la détermination (S104'), d'un deuxième emplacement (62) de chaque dispositif trouvé sur la base du premier emplacement (61) ;
- l'affichage (S105) d'une liste de dispositifs trouvés en association avec le premier emplacement (61) comprenant : l'affichage de chaque dispositif trouvé au deuxième emplacement (62) respectif sur la carte.

3. Procédé (100) selon la revendication 1, dans lequel le balayage (S103) de l'environnement (70) pour trouver des dispositifs comprend en outre :
- le balayage (S1031) de l'environnement (70) en effectuant une communication sans fil via une carte réseau WiFi pour dispositifs ;
- l'acquisition (S1032) d'une liste WiFi dans l'environnement (70), dans lequel la liste WiFi comprend la liste des dispositifs trouvés.

4. Procédé (300) de détection de vulnérabilité à l'aide d'un deuxième appareil portable sans fil (20), comprenant, lorsque le deuxième appareil portable sans fil (20) est à un premier emplacement (61) dans un environnement (70) :
- l'acquisition (S301), par le deuxième appareil portable sans fil (20), d'un modèle spatial de l'environnement (70), dans lequel le modèle spatial est acquis à l'aide d'au moins une caméra (105) du deuxième appareil portable sans fil (20), dans lequel ladite au moins une caméra (105) est configurée pour capturer des images et pour les traiter afin de reconstruire le modèle spatial (90) ;
- l'affichage (S302), par le deuxième appareil portable sans fil (20) sur une interface utilisateur, sur un écran, d'une carte de l'environnement (70) basée sur le modèle spatial ;
- l'envoi (S303), par le deuxième appareil portable sans fil (20), d'une première indication à un serveur en nuage (30), indiquant le balayage de l'environnement (70) pour trouver des dispositifs ;
- la réception (S307), par le deuxième appareil portable sans fil (20), du résultat du balayage en provenance du serveur en nuage (30), dans lequel le résultat de balayage comprend une liste de dispositifs trouvés ;
- le marquage (S308), par le deuxième appareil portable sans fil (20), du premier emplacement (61) sur la carte s'il existe un dispositif dans la liste ;
- l'affichage (S309), par le deuxième appareil portable sans fil (20) sur l'interface utilisateur, sur l'écran, de la liste des dispositifs trouvés en association avec le premier emplacement (61) ;
- l'envoi (S310), par le deuxième appareil portable sans fil (20), d'une deuxième indication au serveur en nuage (30), indiquant des vulnérabilités des dispositifs trouvés ;
- la réception (S314), par le deuxième appareil portable sans fil (20), d'un résultat de détection en provenance du serveur en nuage (30), dans lequel le résultat de détection comprend une liste de vulnérabilités détectées de chaque dispositif trouvé ;
- l'affichage (S315), par le deuxième appareil portable sans fil (20) sur une interface utilisateur, sur un écran, de vulnérabilités détectées de chaque dispositif trouvé.

5. Procédé selon la revendication 4, comprenant en outre :
- l'envoi (S308'), d'une troisième indication au serveur en nuage (30), indiquant le premier emplacement (61) ;
- la réception (S308‴), d'une quatrième indication en provenance du serveur en nuage (30), indiquant un deuxième emplacement (62) de chaque dispositif trouvé, déterminée sur la base du premier emplacement (61) ;
- l'affichage (S309) de la liste des dispositifs trouvés en association avec le premier emplacement (61) comprenant : l'affichage de chaque dispositif trouvé au deuxième emplacement (62) respectif sur la carte.

6. Système (200) pour la détection de vulnérabilité, comprenant : un deuxième appareil portable sans fil (20) à un premier emplacement (61) dans un environnement (70), un troisième appareil portable sans fil (40) au premier emplacement (61) dans un environnement (70) et un serveur en nuage (30), dans lequel
- le deuxième appareil portable sans fil (20) est configuré pour :
- acquérir un modèle spatial d'un environnement (70) à l'aide d'au moins une caméra (105) du deuxième appareil portable sans fil (20), dans lequel ladite au moins une caméra (105) est en outre configurée pour capturer des images et les traiter afin de reconstruire le modèle spatial (90) ;
- afficher sur une interface utilisateur, sur un écran du deuxième appareil portable sans fil (20), une carte de l'environnement (70) basée sur le modèle spatial acquis ;
- envoyer une première indication à un serveur en nuage (30), indiquant un balayage de l'environnement (70) pour trouver des dispositifs ;
- le serveur en nuage (30) étant en outre configuré pour :
- recevoir la première indication en provenance du deuxième appareil portable sans fil (20) ;
- envoyer une cinquième indication au troisième appareil portable sans fil (40), indiquant un balayage de l'environnement (70) pour trouver des dispositifs ;
- le troisième appareil portable sans fil (40) est configuré pour :
- recevoir la cinquième indication;
- balayer l'environnement (70) pour trouver des dispositifs en effectuant une communication sans fil ;
- envoyer le résultat de l'analyse au serveur en nuage (30), le résultat de l'analyse comprenant une liste de dispositifs trouvés ;
- le serveur en nuage (30) étant en outre configuré pour :
- recevoir le résultat du balayage ;
- envoyer le résultat du balayage au deuxième appareil portable sans fil (20) ;
- le deuxième appareil portable sans fil (20) étant en outre configuré pour :
- marquer le premier emplacement (61) sur la carte s'il existe un dispositif dans la liste ;
- afficher sur l'interface utilisateur, sur l'écran, la liste des dispositifs trouvés en association avec le premier emplacement (61) ;
- envoyer une deuxième indication au serveur en nuage (30), indiquant des vulnérabilités des dispositifs trouvés ;
- le serveur en nuage (30) étant en outre configuré pour :
- recevoir la deuxième indication ;
- envoyer une sixième indication au troisième appareil portable sans fil (40), indiquant des vulnérabilités des dispositifs trouvés ;
- le troisième appareil portable sans fil (40) étant en outre configuré pour :
- recevoir la sixième indication ;
- détecter des vulnérabilités des dispositifs trouvés ;
- envoyer un résultat de détection au serveur en nuage (30), dans lequel le résultat de détection comprend une liste de vulnérabilités détectées de chaque dispositif trouvé ;
- le serveur en nuage (30) étant en outre configuré pour :
- recevoir le résultat de la détection ;
- envoyer le résultat de la détection au deuxième appareil portable sans fil (20) ;
- le deuxième appareil portable sans fil (20) étant en outre configuré pour :
- recevoir le résultat de la détection ;
- afficher sur l'interface utilisateur, sur l'écran, les vulnérabilités détectées de chaque dispositif trouvé.

7. Système selon la revendication 6, dans lequel :
- le deuxième appareil portable sans fil (20) est en outre configuré pour envoyer une troisième indication au serveur en nuage (30), indiquant le premier emplacement (61) ;
- le serveur en nuage (30) étant en outre configuré pour :
- recevoir la troisième indication ;
- déterminer un deuxième emplacement (62) de chaque dispositif trouvé sur la base du premier emplacement (61) ;
- envoyer une quatrième indication au premier appareil portable sans fil (10), indiquant chaque deuxième emplacement (62) ;
- le deuxième appareil portable sans fil (20) étant en outre configuré pour :
- recevoir la quatrième indication ;
- afficher chaque dispositif trouvé au deuxième emplacement respectif (62) sur la carte.

8. Système selon la revendication 6, dans lequel, lors d'un balayage de l'environnement (70) pour trouver des dispositifs, le troisième appareil portable sans fil (40) est en outre configuré pour :
- balayer l'environnement (70) via une carte réseau WiFi pour trouver des dispositifs ;
- acquérir une liste WiFi dans l'environnement (70), dans lequel la liste WiFi comporte la liste des dispositifs trouvés.

9. Appareil (10, 20, 30, 40) pour la détection de vulnérabilité, comprenant des modules configurés pour mettre en œuvre le procédé selon l'une quelconque des revendications 1 à 5.

10. Support lisible par ordinateur pour la détection de vulnérabilité, stockant des instructions exécutables par ordinateur, dans lequel les instructions exécutables par ordinateur, lorsqu'elles sont exécutées, amènent au moins un processeur à mettre en œuvre le procédé selon l'une quelconque des revendications 1 à 5.
